Europäisches Patentamt

(19) European Patent Office

Office européen des brevets

(11) Publication number: **0 122 968**
**B1**

(12) **EUROPEAN PATENT SPECIFICATION**

(45) Date of publication of patent specification: **19.08.87**

(51) Int. Cl.⁴: **B 65 B 51/22**, B 29 C 71/04

(21) Application number: **83112542.2**

(22) Date of filing: **13.12.83**

(54) **Method for forming a burstable pouch.**

(30) Priority: **25.04.83 US 488287**

(43) Date of publication of application:
**31.10.84 Bulletin 84/44**

(45) Publication of the grant of the patent:
**19.08.87 Bulletin 87/34**

(84) Designated Contracting States:
**AT BE CH DE FR GB IT LI LU NL SE**

(56) References cited:
**GB-A- 826 002**
**GB-A- 989 870**
**US-A-3 113 899**
**US-A-3 666 604**
**US-A-3 847 279**
**US-A-4 183 986**

(73) Proprietor: **S.C. JOHNSON & SON, INC.**
**1525 Howe Street**
**Racine, Wisconsin 53403 (US)**

(72) Inventor: **Malek, Edward J.**
**213 South Colony Avenue**
**Union Grove Wisconsin 53182 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates to methods for forming burstable pouches having breakable seals along one edge.

A great variety of flowable products can advantageously be packaged in burstable pouches. Such pouches may contain a variety of liquids or other flowable materials. Examples include ketchup, mustard, salad dressings, certain photographic compositions, air fresheners, insecticides, water, skin lotions, soaps and hair care products, to name just a few.

In some cases a burstable pouch may be sealed within another larger pouch. For example, water may be stored in a burstable pouch which is in a larger flexible pouch along with dehydrated foodstuffs. When the water pouch bursts the water is mixed with the food to prepare it for consumption. Likewise, an air freshening composition may be stored in a burstable pouch made of flexible impermeable material, and such pouch may be placed within a larger sealed pouch made of flexible plastic material which is permeable to the air freshening composition. When the burstable pouch is burst, the air freshening composition will be dispensed over time through the permeable outer pouch. See, for example, PCT Publication No. WO 82/02700. In still other cases, two chemical reactants may be stored separately in adjacent connected pouches separated by a burstable seal. Upon bursting of such seal, the contents of the two pouches intermix and react to produce some desired composition or effect. The number of applications for burstable pouch technology are legion.

A burstable pouch may burst by pre-intended breakage of a seal along one edge of the pouch. Such seal can break when the pouch is squeezed, while any remaining edge seals of such pouch are permanent and resist breakage. Many of such pouches are made of plastic films. It is burstable pouches of this type to which this invention is directed.

The prior art discloses a number of methods for forming breakable seals between two plastic films. In some cases, seams made by heat and pressure applied through heat sealing bars are made breakable by the application of less heat and pressure than is normally used in making permanent seals and/or by reducing the width of the area to which the heat and pressure are applied. These methods of making breakable seals will often produce seams which are either too strong to be easily ruptured or too weak to maintain a satisfactory seal during normal handling. Seal inconsistency is a major problem.

The prior art discloses an improvement on such techniques — the use of additional foam layers which form the breakable seal. See PCT Publication No. WO 82/02700. The imposition of foam layers in the formation of breakable seals, while somewhat helpful, fails to produce desired consistency of breakable seals. The strength and bursting qualities of such seals remain extremely sensitive to variations in the heat sealing steps, including, for example, the times, temperatures, and pressures involved.

Other methods for making breakable seals involve the use of chemical or mechanical inhibitors between the films to be sealed. A chemical inhibitor can prevent the formation of a permanent seal, giving instead a breakable seal, even though a heat sealing bar is applied for a time and at a temperature sufficient to make a permanent seal in the absence of such inhibitor. Mechanical inhibitors serve the same purpose by interrupting the seal. United States Patent No. 3,074,544, for example, discloses the use of masking means such as porous fibrous webs to weaken heat seals. The quality of such breakable seals tends to vary unacceptably.

Likewise, the use of ultrasonic sealing techniques to seal together two laminated films, in which the contacting layers of the two films have a relatively low melting point and the remote layers have a relatively high melting point, fails to provide desired consistency in the breakable seals. US—A—3,847,279 and US—A—3,749,620 describe the use of ultrasonic sealing for this purpose. Such burstable seals, however, are not sufficiently consistent in their quality from package to package to be reliably used in many applications. One disadvantage of ultrasonic welding in making breakable seals is that, when such ultrasonic seals intersect previously made permanent heat seals, the area of intersection is often weak and may be prone to leak. Furthermore, such ultrasonic seals are of necessity narrow in width and thus prone to be less consistent from pouch to pouch. Ultrasonic sealing tends to be destructive to the films to some extent, which may lead to such inconsistency.

A variety of modifications and adjustments have been made to basic welding methods for plastic films in order to achieve desirable qualities in a burstable pouch. Such methods have produced less than desirable results in pouch making for various applications.

All of the prior methods for making breakable seals for burstable pouches have significant drawbacks. There is a clear need for an improved method of forming closed burstable pouches having breakable seals of high consistency in strength and bursting qualities.

The method of this invention involves the use of radio frequency (RF) welding in a unique way to achieve highly consistent breakable seals in burstable pouches. RF welding heretofore has only been used for permanent seals (see GB—A—989,870) and has not been used in the manufacture of breakable seals for burstable plastic film pouches.

According to the present invention there is provided a method for forming a closed burstable pouch having a breakable seal at a first edge, and comprising a laminated polymeric film having an outer layer which is responsive to a radio-frequency welding field and an inner layer which is substantially non-responsive to a radio-frequency

2

welding field, said outer layer having greater cohesive strength to resist bursting pressure than the remainder of said film and having a higher melting point than the melting point of the inner layer;

the method including the steps of orienting two sheets of said film in overlying relationship with their inner layers in contact and their edges aligned;

permanently fusing together said sheets along their aligned edges, except along said first edge; filling said pouch; forming a breakable seal at the first edge, characterized in that the step of forming the breakable seal is either before or after said fusing step, and comprises sandwiching the sheets along said first edge between radio-frequency welding electrodes and applying a radio-frequency field therebetween for a time and at an intensity to heat said outer layers sufficiently to fuse said inner layers by heat transfer from said outer layers without melting said outer layers, whereby a seal is formed without destroying the separate integrity of said outer layers.

The inner layer of the laminated polymeric film may be a foamed material. Preferably the difference in melting points of the inner and outer layers is at least 30°C.

It has been found that the breakable seals of pouches produced by the method of the invention are very consistent from pouch to pouch in seal strength and in the squeezing pressure necessary for bursting. It has been found that the RF field intensity and the field application time can vary within a broad acceptable range without significantly varying the strength and bursting qualities of the breakable seals thus formed. The separate integrity of each of the two outer layers is not destroyed, while the inner layers fuse essentially completely rather than being tacked together at their common surface.

While not wanting to be bound by any theoretical discussion of this invention, it is believed that the removal of heat by conduction from the RF-excitable outer layers to the RF electrodes aids in maintaining the separate integrity of such outer layers even though the melting point of such outer layer material is not much greater than the melting point of the inner layer material. During RF welding of such laminates, the inner surfaces of the outer layers are believed to be the locations of greatest heat. This heat is transferred not only outwardly to the RF welding electrodes but inwardly to the adjoining layers, and such heat transfer is sufficient to completely fuse the inner layers, while the separated outer layers remain intact.

It is believed that the complete fusion of the inner layers may be one key to the high consistency of burstable seals. The inner layers fuse completely into a single layer over a wide range of RF energies applied, without either weakening the bond thus made (in the case of lower amounts of RF energy) or destroying the integrity of the outer layers by melting the outer layers (in the case of higher amounts of energy). It is believed that increasing the spread between the melting points of the inner and outer layer materials increases the tolerance available in manufacturing procedures. That is, the greater the melting point spread, the greater the permissible variance in RF field intensity and time applied.

In the breakable seals, preserving the separate integrity of the outer layers is of great importance to bursting qualities. The outer layers thus preserved, given that they have greater cohesive strength to resist bursting pressure than the remaining laminations of the film, remain intact while the relatively less cohesive remaining portions break. A highly preferred inner layer material is a foamed film. It is believed that the breakage which occurs across the seal during bursting is within the foam. However, in some cases, depending on what tie layer(s) may be used in forming the laminated film and depending on what other layers may be positioned near the main inner layer, a combination of layer breakage and delamination may in some cases occur. Regardless of theoretical considerations, the RF welding as used in this invention has provided surprising high consistency in breakable seals.

In a highly preferred method of this invention, two burstable pouches are made together, each as half of a double-sized intermediate pouch which is then split to form two separate identical burstable pouches. The term "intermediate pouch" means a pouch from which the final products, that is, the burstable pouches, are made.

In this preferred method, the permanent fusing step is around aligned edges of the intermediate pouch to close the intermediate pouch, the filling step having been carried out before completion of such permanent fusing step. Thereafter, breakable seals for both of the burstable pouches are formed by carrying out the RF sealing step on a strip across the intermediate pouch, to divide and separate the contents of the intermediate pouch. Then the RF seal is cut along a center dividing line to make two breakable seals, one for each of the burstable pouches. This preferred method has the added advantage of forming pouches which are very full and thus easily burst by squeezing.

In the accompanying drawings:

FIGURE 1 is a perspective view of a burstable pouch formed in accordance with one embodiment.

FIGURE 2 is a top plan view.

FIGURE 3 is a fragmentary sectional view, taken along Section 3—3 as shown in FIGURE 2.

FIGURE 4 is a similar sectional view showing the formation of the breakable seal.

FIGURE 5 is a plan view of an intermediate pouch used in the formation of two burstable pouches in accordance with a preferred embodiment.

FIGURE 6 is a plan view of the intermediate pouch of FIGURE 5 after a breakable seal has been made thereacross and prior to separation of such intermediate pouch into two burstable pouches.

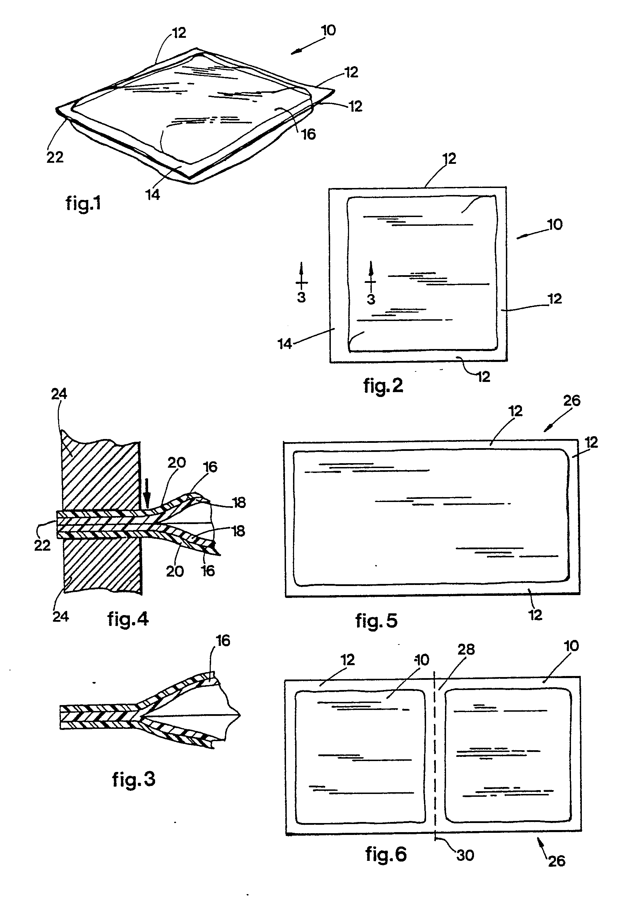

FIGURES 1—4 illustrate a single burstable pouch 10. Pouch 10 has four edges, three of which, designated by numeral 12, have permanent seals therealong and the fourth of which has a breakable seal 14.

As previously discussed, pouch 10 is formed from two laminated polymeric film sheets 16. Laminated sheets 16 include inner layers 18 and outer layers 20. Laminated sheets 16 are formed by well-known laminating methods forming no part of this invention. Depending on the materials selected, a thin tie layer of some bonding agent may be used between inner and outer layers 18 and 20. Additional layers may also be included in the laminated film used for sheets 16.

Outer layer 20 of the laminated film is responsive to an RF welding field. Examples of suitable film materials for outer layer 20 include nylon, polyvinyl chlorides, styrene acrylonitriles, sulfone polymers, polycarbonates, nitrile polymers, and acrylonitrile butadiene polymers. Material for outer layer 20 has a melting point higher than the melting point of the material selected for inner layer 18. Furthermore, outer layer 20 has a cohesive strength substantially greater than the remainder of the laminated film in order to resist bursting pressures which will be applied to burst the pouches formed with such laminated material. The thickness of the outer layer 20 can vary significantly. It is preferred, however, that the outer layer 20 be thin, preferably less than about 100 microns in thickness.

Inner layer 18 of the laminated film is a non-polar material which is substantially non-responsive to an RF welding field and which has a melting point below the melting point of the outer layer 20 to which it is laminated. Furthermore, the inner layer has a much lower cohesive strength that the outer layer to facilitate bursting. Inner layer 18 is also preferably thin, often thinner than outer layer 20. Foamed materials are highly preferred although suitably low cohesive strength can be obtained by other means or simply by choice of materials. Examples of materials which may be used to make, for example, a foam film inner layer 18 are polypropylene, low density polyethylene, ethylene methyl acrylate, polybutylene, ethylene vinyl acetate, and vinylidene chlorides. Such materials are not excitable by application of an RF field.

In selecting laminated films for use in the method of this invention, other considerations must be taken into account as well. Resistance to permeation by the intended contents and the nature and extent of possible abuse during storage are just two factors which must be considered.

A highly preferred laminated film for use in this invention is a film available from Hoechst/Kalle, of Wiesbaden, Germany, which is known as Polyamide/SND film. This film includes a nylon outer layer which is about 60 microns thick and a foamed polypropylene inner layer which is about 25 microns thick. The melting point of the outer layer in this film is at least about 30°C above the melting point of the inner layer. Another suitable laminate would have a 60-micron polyvinyl chloride outer layer and a 60-micron low-density polyethylene foam inner layer. The PVC outer layer would be formulated to have a higher melting point than the polyethylene inner layer. Another acceptable laminated film would have a poly(ethylene terphthalate) outer layer 20, such as those available from Eastman Chemical under the trademark CODAR, together with a 25-micron vinylidene chloride inner layer, such as that available from Dow Chemical Corporation under the trademark SARAN. Such a polymer would have a very substantial spread in the melting points of inner and outer layers.

In making burstable pouch 10, two sheets of such laminated film are oriented in overlying relationship with their inner layers 18 in contact and their edges aligned. Thereafter, permanent seals are made along edges 12, preferably using well-known techniques such as heat sealing or ultrasonic welding.

Either before or after formation of such permanent seals, the breakable seal is made along a first edge 22 by sandwiching the laminated sheets 16 along first edge 22 between RF welding electrodes 24 and by applying a RF welding field. The RF welding field is applied for a time and at an intensity to heat outer layers 20 sufficiently to fuse inner layers 18 by transfer of heat from outer layers 20 without melting outer layers 20. FIGURE 4 illustrates the beginning of this operation. FIGURE 3 illustrates the breakable seal after completion of this operation, showing that inner layers 18 have fused completely while there has been no destruction to the separate integrity of outer layers 20. Before formation of the last of the four edge seals, pouch 10 is filled using known techniques.

FIGURES 5 and 6 illustrate a double-sized intermediate pouch 26 which is used to simultaneously form two burstable pouches 10. The formation of intermediate pouch 26 is carried out in essentially the same manner as is the formation of single pouch 10, except permanent seals are made on all four sides of intermediate pouch 26. The filling of intermediate pouch 26 takes place prior to completion of the last of such permanent seals. Thereafter, a breakable seal 28 is formed across the middle of intermediate pouch 26, dividing and separating the contents of intermediate pouch 26. Such breakable seal is formed by application of an RF field in the same manner as previously described. After formation of burstable seal 28, intermediate pouch 26 is cut in half along a line 30 through the middle of breakable seal 28. This preferred method allows the formation of burstable products having a high liquid content, which facilitates bursting.

The term "inner layer" may in some cases refer to more than one layer of material in a film laminate, provided such layers together meet the criteria set forth herein. Likewise, the term "outer layer" is not to be construed to require a single layer of material, although a single layer is preferred.

## Claims

1. A method for forming a closed burstable pouch (10) having a breakable seal (14) at a first edge (22), and comprising a laminated polymeric film (16) having an outer layer (20) which is responsive to a radio-frequency welding field and an inner layer (18) which is substantially non-responsive to a radio-frequency welding field, said outer layer (20) having greater cohesive strength to resist bursting pressure than the remainder of said film (16) and having a higher melting point than the melting point of the inner layer (18);

the method including the steps of orienting two sheets of said film (16) in overlying relationship with their inner layers (18) in contact and their edges (12) aligned;

permanently fusing together said sheets (16) along their aligned edges (12), except along said first edge (22); filling said pouch; forming a breakable seal at the first edge, characterized in that the step of forming the breakable seal is either before or after said fusing step, and comprises sandwiching the sheets along said first edge (22) between radio-frequency welding electrodes (24) and applying a radio-frequency field therebetween for a time and at an intensity to heat said outer layers (20) sufficiently to fuse said inner layers (18) by heat transfer from said outer layers without melting said outer layers, whereby a seal (14) is formed without destroying ·the separate integrity of said outer layers.

2. The method of claim 1, characterized in that said burstable pouch (10) is formed together with a similar burstable pouch, each as half of a double-sized intermediate pouch (26);

said orienting step is carried out for said intermediate pouch (26);

said fusing around said aligned edges (12) closes said intermediate pouch;

said filling is carried out for both said burstable pouches (10) by filling said intermediate pouch (26) before completion of said fusing step; and

breakable seals (28) for both said burstable pouches (10) are formed by performing said sealing step on a strip across said intermediate pouch, dividing and separating the intermediate pouch contents, and thereafter cutting said intermediate pouch (26) in two along a line (30) which divides said seal strip (28) into two breakable seals, one for each burstable pouch (10).

3. The method of claim 1 or 2, characterized in that said inner layer (18) of said laminated polymeric film (16) is foamed material.

4. The method of claim 1, 2 or 3, characterized in that the difference in melting points of the inner and outer layers (18, 20) is at least about 30°C.

## Patentansprüche

1. Verfahren zum Herstellen eines geschlossenen, berstfähigen Beutels (10), der an einem ersten Rand (22) eine aufbrechbare Abdichtung (14) besitzt und der mindestens teilweise aus einem Schichtstoff aus polymerem Film (16) mit einer auf ein Hochfrequenzschweißfeld ansprechfähigen äußeren Schicht (20) und einer auf ein Hochfrequenzschweißfeld im wesentlichen nicht ansprechfähigen inneren Schicht (18) besteht, wobei die äußere Schicht (20) gegenüber einem Berstdruck eine höhere Kohäsionsfestigkeit hat als der übrige Teil des Films (16) und einen höheren Schmelzpunkt hat als die innere Schicht (18); und

in dem Verfahren die beiden Blätter aus dem Film (16) in einer solchen Orientierung aufeinandergelegt werden, daß ihre inneren Schichten (18) einander berühren und ihre Ränder (12) miteinander fluchten;

die genannten Blätter (16) längs ihrer miteinander fluchtenden Ränder (12) mit Ausnahme des genannten ersten Randes (22) miteinander verschmolzen werden; der Beutel gefüllt wird; und an dem ersten Rand eine aufbrechbare Abdichtung gebildet wird, dadurch gekennzeichnet, daß die aufbrechbare Abdichtung entweder vor oder nach dem Verschmelzen gebildet wird und daß die genannten Blätter längs des genannten ersten Randes (22) zwischen Hochfrequenzschweißelektroden (24) angeordnet werden und zwischen diesen ein Hochfrequenzfeld während einer solchen Zeit und mit einer solchen Feldstärke erzeugt wird, daß die genannten äußeren Schichten (20) derart genügend erhitzt werden, daß infolge der Wärmeübertragung von den äußeren Schichten die inneren Schichten (18) schmelzen, ohne daß dabei die äußeren Schichten schmelzen, so daß eine Abdichtung (14) erzeugt wird, ohne daß die Integrität der voneinander getrennten äußeren Schichten zerstört wird.

2. Verfahren nach Anspruch 1, dadurch gekennzeichnet, daß der berstfähige Beutel (10) zusammen mit einem ähnlichen berstfähigen Beutel in Form je einer Hälfte eines als Zwischenprodukt gebildeten Beutels (26) der doppelten Größe hergestellt wird,

das Aufeinanderlegen zur Bildung des als Zwischenprodukt gebildeten Beutels (26) durchgeführt wird,

durch das Verschmelzen an den miteinander fluchtenden Rändern (12) der als Zwischenprodukt gebildete Beutel geschlossen wird,

das Füllen für beide berstfähige Beutel (10) derart durchgeführt wird, daß der als Zwischenprodukt erhaltene Beutel (26) vor dem vollständigen Verschmelzen gefüllt wird; und

aufbrechbare Abdichtungen (28) für die beiden berstfähigen Beutel (10) dadurch gebildet werden, daß das Abdichten an einem Streifen durchgeführt wird, der sich quer über den als Zwischenprodukt gebildeten Beutel erstreckt, der Inhalt des als Zwischenproduckt erhaltenen Beutels geteilt wird, die Teile voneinander getrennt werden, und danach der als Zwischenprodukt erhaltene Beutel (26) in zwei Teile längs einer Linie (30) zerschnitten wird, die den Dichtstreifen (28) in zwei aufbrechbare Abdichtungen für je einen der berstfähigen Beutel (10) teilt.

3. Verfahren nach Anspruch 1 oder 2, dadurch gekennzeichnet, daß die innere Schicht (18) des Schichtstoffes aus polymerem Film (16) aus Schaumstoff besteht.

4. Verfahren nach Anspruch 1, 2 oder 3, dadurch gekennzeichnet, daß zwischen den Schmelzpunkten der inneren und der äußeren Schicht (18, 20) eine Differenz von mindestens etwa 30°C vorhanden ist.

**Revendications**

1. Procédé de fabrication d'une pochette éclatable fermée (10) présentant un joint de rupture (14) sur un premier bord (22) et comportant un film polymère stratifié (16) comprenant une couche extérieure (20) qui réagit à un champ de soudage à fréquence radio et une couche intérieure (18) qui ne réagit sensiblement pas à un champ de soudage à fréquence radio, ladite couche extérieure (20) présentant une force de cohésion plus grande, pour résister à la pression d'éclatement, que le reste dudit film (16) et présentant un point de fusion plus élevé que le point de fusion de la couche intérieure (18);

le procédé incluant les étapes consistant à orienter deux feuilles dudit film (16) de façon qu'elles se recouvrent, avec leurs couches intérieures (18) en contact et leurs bords (12) alignés;

à fondre ensemble de façon définitive lesdites feuilles (16) le long de leurs bords aligné (12), à l'exception dudit premier bord (22); à remplir ladite pochette; à fabriquer un joint de rupture sur le premier bord, caractérisé en ce que l'étape de fabrication du joint de rupture a lieu soit avant soit après ladite étape de fusion et consiste à placer les feuilles le long dudit premier bord (22) entre des électrodes de soudage à fréquence radio (24) et à appliquer un champ de fréquence radio entre elles pendant une durée et d'une intensité nécessaires pour chauffer lesdites couches extérieures (20) suffisamment pour fondre lesdites couches intérieures (18) par transfert de chaleur à partir desdites couches extérieures sans fondre lesdites couches extérieures, ce par quoi il se forme un joint (14) sans destruction de la cohésion propre desdites couches extérieures.

2. Procédé selon la revendication 1, caractérisé en ce que l'on fabrique ladite pochette éclatable (10) en même temps qu'une pochette éclatable semblable, chacune sous forme d'une moitié d'une pochette intermédiaire de taille double (26);

en ce que ladite étape d'orientation s'effectue pour ladite pochette intermédiaire (26);

en ce que ladite fusion autour desdits bords alignés (12) ferme ladite pochette intermédiaire;

en ce que l'on effectue le remplissage pour les deux dites pouchettes éclatables (10) en remplissant ladite pochette intermédiaire (26) avant d'achever ladite étape de fusion; et

en ce que l'on forme des joints de rupture (28) pour les deux dites pochettes éclatables (10) en exécutant ladite étape de formation du joint sur une bande transversale de ladite pochette intermédiaire, en divisant et en séparant le contenu de la pochette intermédiaire puis en coupant ladite pochette intermédiaire (26) en deux le long d'une ligne (30) qui divise ladite bande de joint (28) en deux joints de rupture, un pour chaque pochette éclatable (10).

3. Procédé selon la revendication 1 ou 2, caractérisé en ce que ladite couche intérieure (18) dudit film polymère stratifié (16) est un matériau mousse.

4. Procédé selon la revendication 1, 2 ou 3, caractérisé en ce que la différence entre les points de fusion de la couche intérieure et de la couche extérieure (18, 20) est au moins d'environ 30°C.

0 122 968

fig.1

fig.2

fig.4

fig.5

fig.3

fig.6

1